(19) Europäisches Patentamt European Patent Office Office européen des brevets

(11) EP 2 784 951 B1

(12) EUROPEAN PATENT SPECIFICATION

(45) Date of publication and mention of the grant of the patent:
17.05.2017 Bulletin 2017/20

(51) Int Cl.:
$H04J\ 14/06$ (2006.01)      $H04L\ 12/26$ (2006.01)
$H04J\ 14/02$ (2006.01)      $H04Q\ 11/00$ (2006.01)
$H04L\ 12/939$ (2013.01)      $H04B\ 10/61$ (2013.01)

(21) Application number: 13305398.3

(22) Date of filing: 28.03.2013

(54) **Method of Optical Data Transmission**

Verfahren zur optischen Datenübertragung

Procédé de transmission de données optiques

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.10.2014 Bulletin 2014/40**

(73) Proprietor: **ALCATEL LUCENT**
**92100 Boulogne-Billancourt (FR)**

(72) Inventors:
• **ZAMI, Thierry**
**91620 NOZAY (FR)**

• **VACONDIO, Francesco**
**91620 NOZAY (FR)**

(74) Representative: **Berthier, Karine et al**
**Alcatel-Lucent International**
**148/152, route de la Reine**
**92100 Boulogne-Billancourt (FR)**

(56) References cited:
**EP-A1- 2 482 481**      **EP-A2- 1 940 194**
**US-A1- 2009 297 162**      **US-A1- 2011 255 866**

**Description**

**Field of the invention**

The invention relates to a method of optical data transmission in an optical network. In detail, the invention relates to a method of optical data reception as well as an optical network element for optical data reception.

**Background**

These days, optical data transmission within optical networks as mesh networks or ring networks experiences an increased popularity for achieving high data rates.

A prominent technology for transmitting data within an optical network is that of Wavelength Division Multiplexing (WDM). In this technology of WDM, different optical signals having respective different wavelengths are transmitted simultaneously along a same optical link or a same optical fiber. In addition to using WDM, there is a prominent further technology called slotted Time Division Multiplexing (TDM). In the technology of slotted TDM, an optical transmission signal contains successive time slots of equal length. Within each time slot, there may be transmitted a respective optical data packet. Thus, an optical TDM signal of a specific wavelength carries a respective optical data packet sequence via a respective time slot sequence.

When combining the technologies of WDM and slotted TDM for optical data transmission, it is a preferred approach to transmit the respective time slot sequences of the respective optical slotted TDM signals, which have respective different wavelengths, synchronous to each other. In other words, the respective synchronous time slot sequences are synchronous to each in other in such a way, that their time slots are of equal length, and in that the beginnings and the endings of the time slots of different optical slotted TDM signals are also synchronous to each other.

An optical data packet carrying transmission data is of a fixed duration, wherein data transmitted within the packet is preferably transmitted by modulating the wavelength of the respective optical signal in dependence on the transmission data. The modulation of the optical signal is carried out, by modulating the phase and preferably also the amplitude of the optical signal in dependence on the transmission data and in accordance with the respective modulation scheme.

One prominent candidate for such a modulation scheme is that of Binary Phase Shift Keying (BPSK), wherein only the phase of the optical signal is modulated. A further prominent candidate for a phase modulation scheme is that of a Quaternary Phase Shift Keying (QPSK). A prominent candidate for a modulation scheme in which the phase and the amplitude of the signal is modulated is that of Quadrature Amplitude Modulation (QAM).

Generally speaking, data transmission may be carried out, by modulating one optical signal of a specific wavelength in accordance with a modulation scheme. Furthermore, a method exploiting the technique of Polarization Dvision Multiplexing (PDM) may be applied. In PDM, a first optical signal of a first wavelength and of a first polarization state as well as a second optical signal of the same first wavelength but of a second polarization state, which is orthogonal to the first polarization state, are both modulated according to the chosen modulation scheme for the purpose of data transmission.

Within the optical network, there may be one or more nodes present, which are able to receive a data packet during a data packet time slot, remove the optical signal representing the data packet and then maybe even furthermore insert a new optical data packet into the same data packet time slot by inserting a new optical signal within this same data packet time slot. For such a removal of an optical signal representing and optical data packet, an optical gate has to be switched on or off at the beginning and the ending of the data packet time slot. Thus, since the switching of the optical gate may not take place instantaneously, the data packet time slots of the optical signals are separated by guard band time slots, which allow an optical gate to be opened or to be closed closed during the time imposed by a guard band time slot. Thus, guard band time slots of specific time duration are needed for allowing the optical nodes to switch on or off the optical gates.

Even furthermore, in the case that a node contains a tunable receiver for receiving an optical data packet at a specific wavelength, this receiver may have to be tuned from one wavelength for one data packet time slot to another wavelength for a next following data packet timeslot. Such tuning can also not take place instantaneously, or in other words within an infinite amount of time, due to the fact, that a tunable receiver uses a tunable laser, which needs a specific or minimum amount of time for tuning from one wavelength to another wavelength. Thus, also due to tunable receivers there may be a need for guard band time slots separating data packet time slots.

Even furthermore, a node may contain a tunable receiver, which uses a tunable laser for down converting a received optical data packet within one time slot and then down converting another optical data packet within a next following time slot for the purpose of data reception. Since this tunable laser within the tunable receiver might have to be tuned from one wavelength to another wavelength between the two adjacent data packet time slots, a separation of the adjacent data packet time slots has to be realized by a guard band time slot.

Thus, also tunable receivers impose a need for realizing guard band time slots between data packet time slots.

The previously mentioned guard band time slots are also called Inter Packet Gaps (IPG). During these guard band time slots, no data packet is present, meaning that no optical signal used for data transmission is present. The consequence is that the amplitude of the optical power of one of the optical WDM signals is modulated due to the fact that within a guard band time slot there is no optical signal present, while there is an optical signal present within a data packet time slot for the purpose of transmitting data via the data packet. Such an amplitude modulation occurring between different optical data packets by the absence of an optical signal within the guard band time slot of one optical WDM signal may affect other optical WDM signals due to the effect of cross amplitude modulation. Possibly, also the effect of cross phase modulation may further cause a degradation of one optical WDM signal due to the absence of optical power within the guard band time slots of another optical WDM signal. Such impairments due to cross amplitude modulation and/or cross phase modulation of the optical WDM signals may lead to an increased error rate of the transmitted data transmitted by the optical WDM signals.

Even furthermore, the amplitude modulation imposed by the absence of optical power within the guard band time slots may affect optical amplifiers, such as Erbium Doped Fiber Amplifiers (EDFA), which may be present within optical network nodes or other devices of the network. In the case that an amplifier experiences a change of optical input power at its input due to the absence of optical power within a guard band time slot, the optical amplifier may cause further signal disturbances, affecting one or more of the optical WDM signals. This in turn may lead to an increased error rate of the transmitted data.

Amplitude modulation may not only be caused by the absence of optical power within the guard band time slots, but also by the absence of optical data packets within data packet time slots due to the fact that not all data packet time slots may be used for data transmission, such that not all data packet time slots are filled by optical WDM signals for data transmission.

One approach known in the prior art is, to insert dummy data packets into empty data packet time slots. While this approach may solve the problem for empty data packet time slots, there is still the problem of having an absence of optical power within guard band time slots, such that the problem of amplitude modulation due to empty guard band time slots causing a deterioration of the other WDM signals is not fully solved.

Another approach known according to the prior art for stabilizing optical amplifiers is to use in addition to the optical WDM signals further optical signals, preferably so called loading channels, which contain optical power for the purpose of supplying a minimum amount of optical power at the input of an amplifier. A loading channel is preferably of a specific continuous wavelength.

While such approaches may help to counteract the problem of having an insufficient amount of optical power at an input stage of an optical amplifier, this may at the same time impose a further problem, due to the fact that the loading channels themselves may affect the optical WDM signals due to cross phase modulation effects caused within the optical fibers.

While using loading channels for stabilizing optical amplifiers, the problem remains, that the absence of optical power within the guard band time slots causes an amplitude modulation, which in turn causes cross phase modulation between the different optical WDM signals. This cannot be fully counteracted by using loading channels.

Up to now, a detection of guard band time slots or empty data packet time slots may be carried out at an optical network element using a photodiode, which detects the presence of optical power. In the case, that the optical power exceeds a certain threshold, the presence of a data packet may be detected within a non-empty data packet time slot.

The document EP 1940194 A2 discloses an optical transmission system in which an optical signal carries a data packet sequence comprising data packets within respective time slots that are separated by guard band time slots. The optical transmission system is capable of time difference correction, wherein an optical switching processor sets identical switching timing for all input ports such that optical signals input from the input ports are switched at the same timing. During initialisation, a time difference corrector transmits an optical dummy packet to an optical switch node and detects synchronicity of the optical dummy packet returned thereto after being switched by the optical switch node. If a synchronisation error is detected, the time difference corrector adjusts the output timing of the optical dummy packet so that the timing of arrival of the optical dummy packet at the optical switching processor may coincide with the switching timing of the optical switching processor, to thereby correct the time difference between the switching timing and the arrival timing.

The document US 2009/0297162 A1 discloses an optical communication base station, that receives an upstream optical signal having an upstream bit-rate specific to each one of a plurality of lower order communication units from a corresponding one of the plurality of lower order communication units, and which transmits a downstream optical signal having a downstream bit-rate specific to each one of the plurality of lower order communication units to a designated one of the plurality of lower order communication units.

The document EP 2482481 A1 discloses a method of data transmission in an optical network in which a number of network elements are connected by a first optical ring and a second optical ring. In a first configuration stage of an optical network node, optical TDM signals are received at a network node along the first optical ring and transmitted along the first optical ring. Upon detecting a failure behind the optical network node, the node switches to a second configuration state, in which the received optical TDM signals are transmitted along the second optical ring in the opposite transmission direction.

The document US 2011/0255866 A1 discloses a system and a method for scheduling timeslots for transmission by optical network nodes in an optical network. A signal strength corresponding to an incoming optical burst from each of a plurality of optical nodes is measured. Signal strength information for the optical nodes based on the measurements is stored in a memory. When scheduling the optical nodes for transmission, a preferred transmission order is determined in response to the stored signal strength information.

**Summary**

Proposed is a method of optical data transmission.

Data is transmitted using multiple phase-modulated optical wavelength division multiplexed signals carrying respective synchronous data packet sequences.

The data packet sequences comprise data packets within respective data packet time slots.

The data packet time slots are separated by guard band time slots.

At the receiving side, different steps are carried out.

The optical WDM signals are received. Within at least one of the optical WDM signals, a data packet is detected within a non-empty data packet time slot.

For the detection, further substeps are carried out.

A time-discrete electrical signal is derived from the one optical WDM signal, by down converting the one optical WDM signal using a local oscillator optical signal.

A first discrete spectral component of the time-discrete electrical signal is determined. The first discrete spectral component corresponds to a direct current component of the time-discrete electrical signal.

A second discrete spectral component of the time-discrete electrical signal is determined. The second discrete spectral component corresponds to a symbol rate of the one optical WDM signal.

A data packet within a non-empty data packet time slot is detected, in the case that a fraction between the spectral components exceeds a predefined threshold.

**Brief description of the Figures**

Figure 1 shows an optical network with network nodes.

Figure 2 shows a data packet time slot and a guard band time slot of an optical WDM signal.

Figure 3a shows an optical network element.

Figure 3b shows a transceiver section of an optical network element according to the prior art.

Figure 4 shows a transceiver section of an optical network element according to an embodiment of the invention.

Figure 5 shows a transceiver section of an optical network element according to a further embodiment of the invention.

Figure 6 shows steps of detecting a data packet.

Figure 7 shows steps of detecting a data packet in the case of polarization division multiplexing.

Figure 8 shows an optical mixer for down converting a received optical signal.

Figure 9 shows an example of detection results using the proposed method.

**Description of embodiments**

In order to grasp the advantages of the method proposed herein, the following aspects have to be taken into consideration.

As previously outlined, the absence of optical power within guard band time slots or empty data packet time

4

slots may impose a problem in different ways. Even using loading channels as additional optical signals is not a sufficient solution for counteracting the problem of cross amplitude modulation caused by the absence of optical power within guard band time slots.

The proposed method does not use a simple photodiode for detecting optical power for the purpose of detecting a data packet, but different steps of signal processing as described above. These different steps of signal processing allow detecting a data packet in the case that guard band time slots and/or empty data packet time slots are filled with optical noise signals. If a simple photodiode was used for the detection of data packets within data packet time slots, such a detection would not work anymore in the case of the presence of optical noise signals being transmitted within guard band time slots and/or empty data packet time slots.

Thus, when filling empty data packet time slots and/or guard band time slots with optical noise signals, there is a need for a new method of detecting whether an actual data packet is present or whether there is an empty data packet time slot and/or a guard band time slot. The different steps of signal processing are properly designed, since these processing steps allow distinguishing between the presence of a phase modulated optical signal representing an actual data packet and the absence of such a phase modulated optical signal representing the data packet during time instances, such as a guard band time slot and/or an empty data packet time slot, which are filled with optical noise signals.

The proposed method for distinguishing between actual transmission signals as phase-modulated or phase-and-amplitude-modulated optical signals and noise signals transmitted within empty data packet time slots and/or guard band time slots allows to transmit within the empty data packet time slots and/or the guard band time slots optical noise signals instead of having an absence of optical power during the guard band time slots. Even furthermore, guard band time slots and/or empty data packet time slots may be filled with optical noise signals for avoiding an absence of optical power within empty data packet time slots, due to the fact, that the proposed method allows to distinguishing between actual transmission signals as phase- or amplitude-modulated optical signals and noise signals transmitted within empty data packet time slots.

It is of clear advantage, that the method proposed herein allows a transmission of optical noise signals within guard band time slots and/or empty data packet time slots, since this reduces the amount of amplitude modulation of optical power, which in turn reduces the effect of cross-amplitude modulation and/or cross-phase modulation causing an impairment of the optical WDM signals used for data transmission. This in turn may reduce the amount of transmission errors caused by such amplitude modulation.

The proposed method as well as the optical network element proposed herein will now be described with regard to the Figures in more detail below.

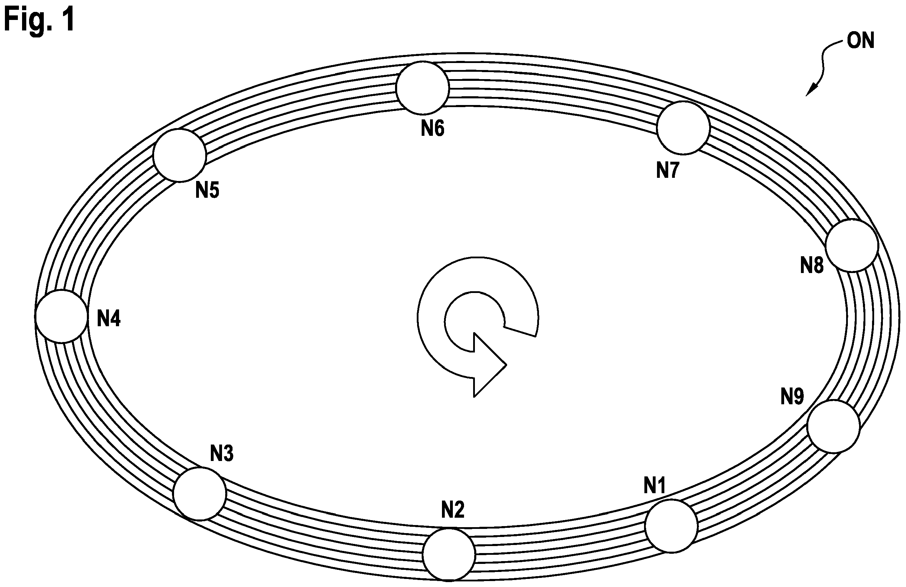

Figure 1 shows an optical network ON with different network nodes N1, ..., N9. The network shown here is an optical ring network. The proposed method as well as the proposed optical network element may work in such a ring network. Furthermore, the proposed method as well as the proposed optical network element may work within other types of optical networks, such as mesh networks.

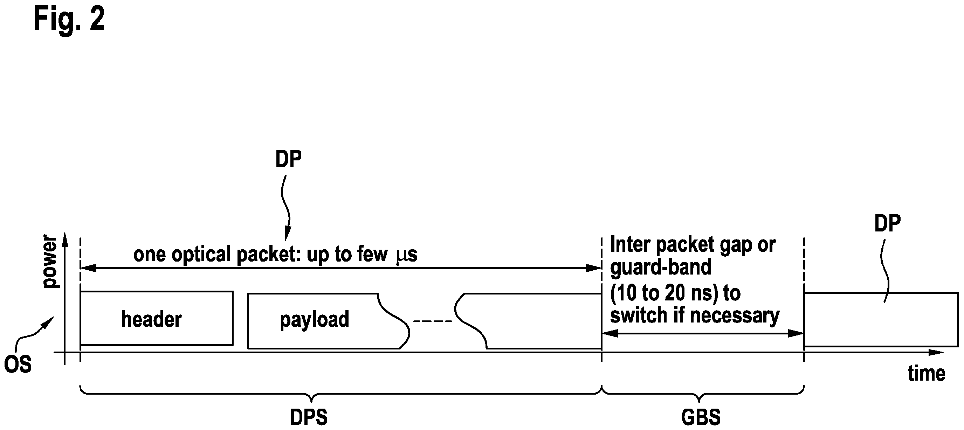

Figure 2 shows an optical WDM signal OS, which carries a data packet sequence. The data packet sequence contains within a data packet time slot DPS a data packet DP, here shown by the data packet elements header and payload forming the data packet. Different data packets DP are separated by a guard band time slot GBS.

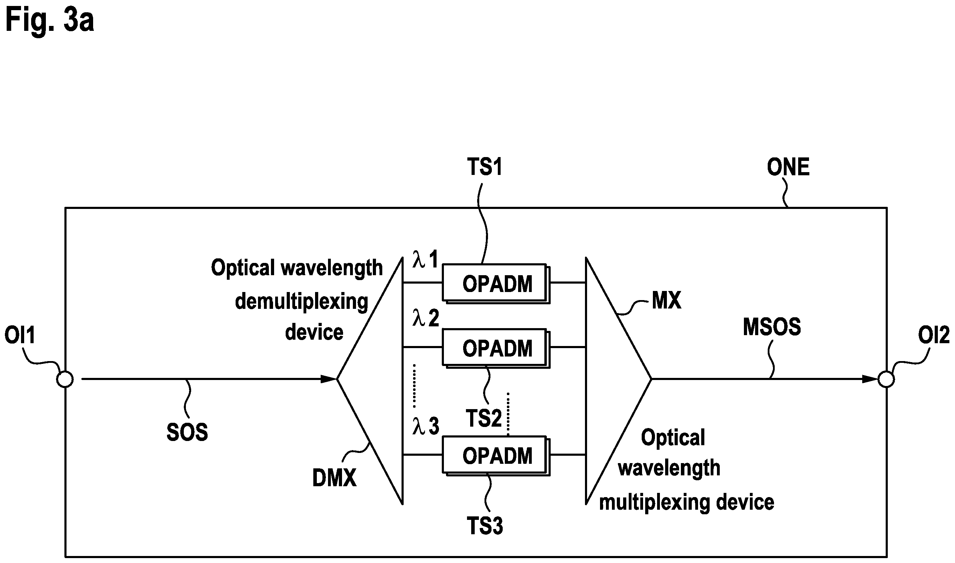

Figure 3a shows an optical network element ONE, which contains an optical interface OI1, at which one or more optical WDM signals may be received. Furthermore, the optical network element ONE contains an optical interface OI2, at which the network element ONE transmits optical WDM signals.

The network element ONE receives at the interface OI1 a set of optical WDM signals SOS. The set of signals SOS is demultiplexed by a demultiplexing device DMX on two different transceiver sections TS1, ..., TS3. The optical signals of the set of optical signals SOS are modulated in their phase and preferably also in their amplitude.

Each of the transceiver sections TS1, ..., TS3 is provided by the demultiplexing device DMX with a respective optical signal having a respective wavelength $\lambda 1, \lambda 2, ..., \lambda 3$. A transceiver section TS1, ..., TS3 may also be called an Optical Packet Add/Drop Module OPADM. A transceiver section TS1, ..., TS3 may detect one or more data packets within the respective optical WDM signal. Furthermore, a transceiver section TS1, ..., TS3 may remove a data packet from one of the respective optical WDM signals. A transceiver section TS1, ..., TS3 may insert a new optical data packet into an empty data packet time slot or into a data packet time slot, from which an optical data packet was removed. The modified respective WDM signals provided by the transceiver sections TS1, ... , TS3 are multiplexed by a multiplexing device MX to a modified set of optical WDM signals MSOS. The node element ONE transmits the modified set of signals MSOS at the interface OI2 into a next following optical network link, which is preferably an optical network fiber.

Control information indicating for an optical data packet, which exact optical data packet has to be detected and down mixed at the optical network element, may be received at the network element via a so-called control channel. Preferably, this control channel is a separate optical TDM signal carrying a respective optical data packet sequence via a respective synchronous time slot sequence. The optical data packets of the control channel signal contain information, from which an optical network element can derive whether it shall detect an optical data packet and provide transmission data decoded from the detected optical data packet towards other network nodes of other types of networks. The control channel has preferably a separate optical TDM signal which has a respective wavelength that differs from the wavelength used for data transmission. Furthermore, in the case that the network element generates a new optical data packet comprising transmission data, the optical network node generates control information, which indicates a respective destination node or a new optical data packet. The network element does so, by preferably inserting the generated control information into an optical data packet of the control channel signal.

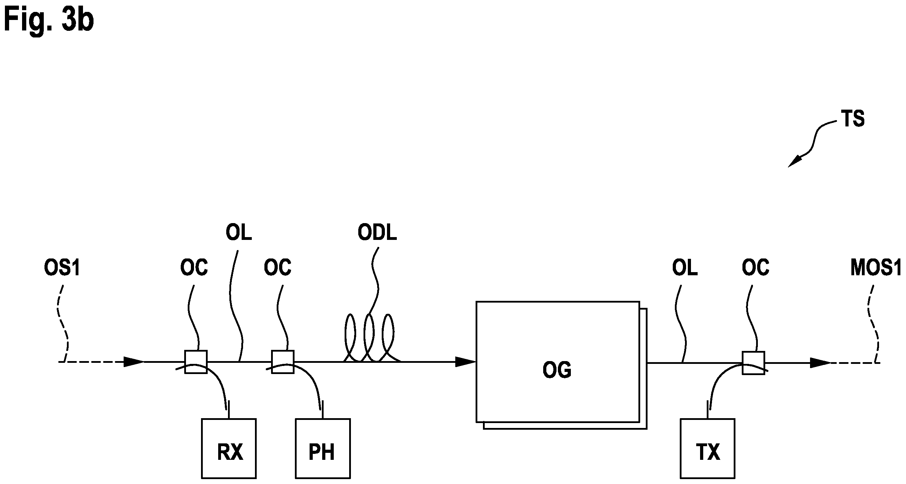

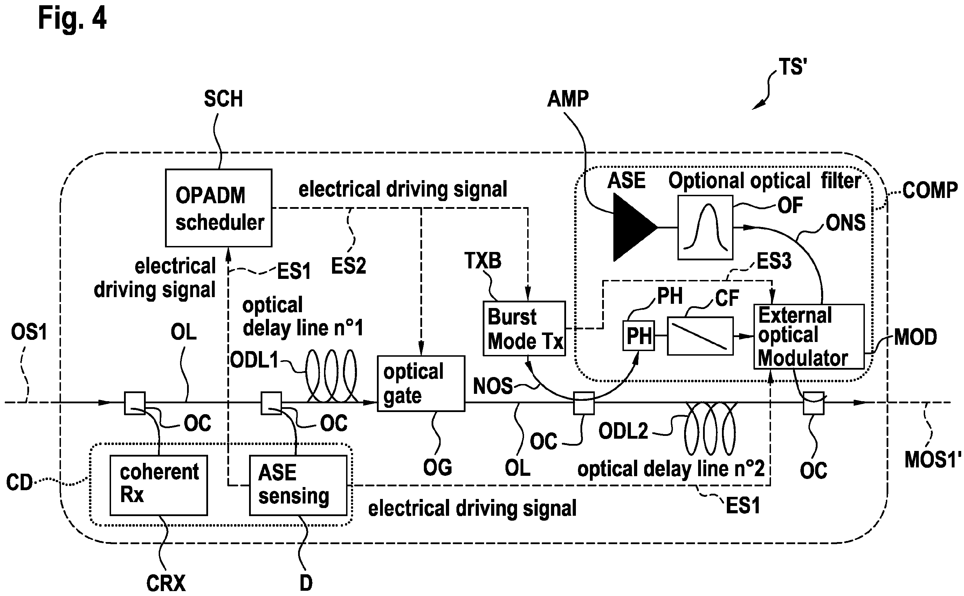

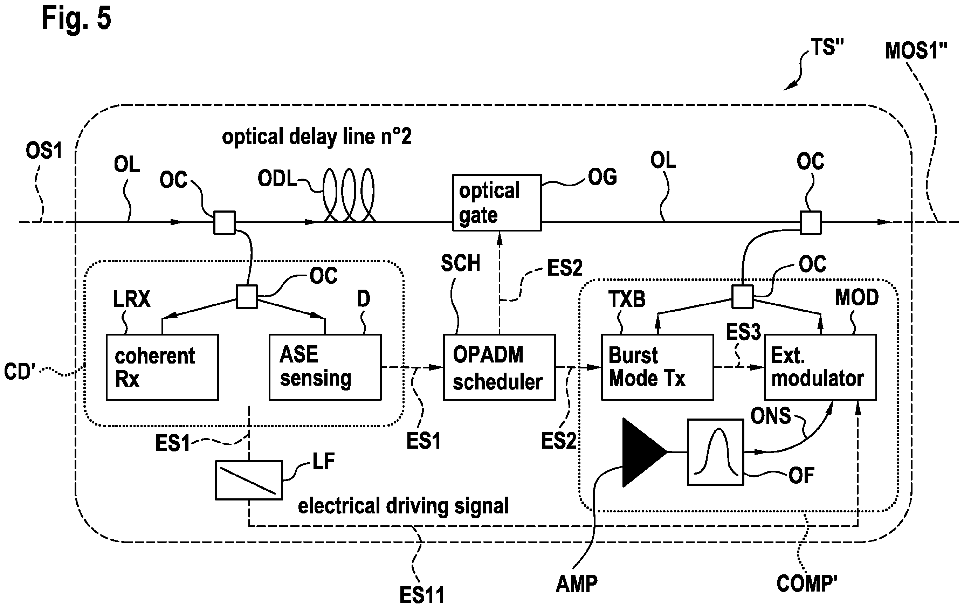

The optical signal carrying the control information may be exploited by a transceiver section for deriving the control information. This control information may then be provided to a control unit, not explicitly shown in Figure 3a or Figure 3b, which controls a data reception carried out by a receiver, such as the receivers RX of Figure 3b or CRX of Figure 4 or Figure 5.

Figure 3b shows a transceiver section TS in detail. This transceiver section TS is a transceiver section according to the prior art. The transceiver section TS is designed for optical WDM signals carrying data packet sequences with guard band time slots, within which optical power is essentially absent. Furthermore, within such data packet sequences, there is an essential absence of optical power within empty data packet time slots.

An optical WDM signal OS1 is provided from the input of the transceiver section TS to a receiving unit RX, which is preferably coupled to an optical line OL via an optical coupler OC. The receiving unit RX may detect a data packet within a respective data packet time slot.

The optical line OL may be formed by one or more optical waveguides, which connect the input of the transceiver section TS with the output of the transceiver section TS.

For detecting an empty data packet time slot, a photodiode PH is coupled to the input of the transceiver TS via the optical line OL and an optical coupler OC. The photodiode PH may detect an empty data packet time slot for the purpose of later on inserting a new data packet into the empty data packet time slot using a transmission unit TX. Furthermore, the photodiode PH may detect an absence of optical power indicating a guard band time slot, from which a data packet periodicity or a guard band time slot periodicity may be derived.

The detection result of the photodiode PH may be used to trigger the transmission unit TX for inserting a new data packet into the optical signal OS1. The transmission unit TX is preferably coupled to the optical line OL via an optical coupler OC.

Preferably, an optical delay line ODL is placed within the optical line OL of the transmission section TS, for allowing a certain amount of time, after the detection result is derived using the photodiode PH, for triggering the transmission unit TX. Furthermore, an optical gate OG may be triggered in dependence on the detection result provided by the photodiode PH for removing the received data packet or another data packet within the respective data packet time slot. Such a removal then allows the transmission unit TX to insert a new data packet into the data packet time slot. The resulting modified optical signal MOS1 is then provided at the output of the transmission section TS towards the multiplexing unit MX shown in Figure 3a.

As it has been outlined previously in detail, the solution provided by the prior art, described herein with regard to Figure 3b, is one, which would not allow a presence of an optical noise signal within an optical gap and/or an empty data packet time slot, due to the detection being carried out using a photodiode. Thus, there is a need for a different method of detection when aiming at transmitting within guard band time slots as well as empty data packet time slots optical noise signals for reducing the effect of amplitude modulation. These optical noise signals are preferably optical signals having noise characteristics. Preferably, the optical noise signals are amplified spontaneous emission noise. Such amplified spontaneous emission noise may be generated by optical amplifiers.

Figure 4 shows a transceiver section TS' as proposed herein according to an embodiment.

The transceiver section TS' receives at its input the optical signal OS1 of a specific respective wavelength at an optical line OL. The optical line OL may be formed by one or more optical waveguides, which connect the input of the transceiver section TS' with the output of the transceiver section TS'.

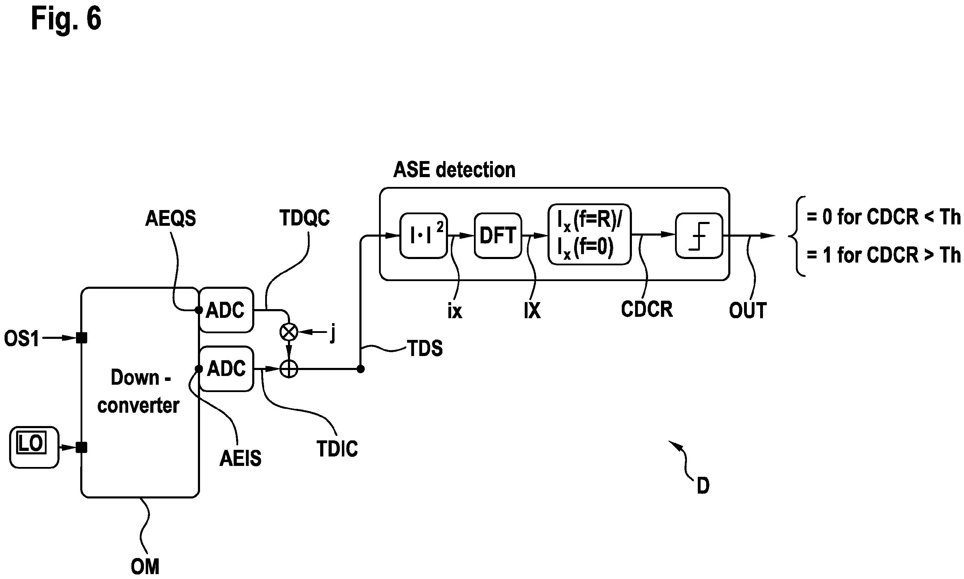

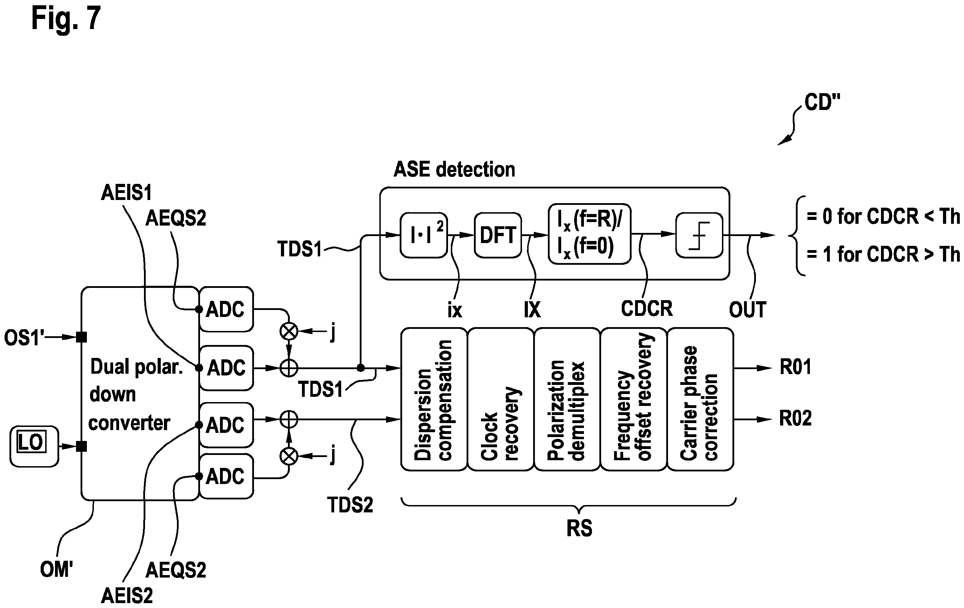

The signal OS1 is provided to a coherent receiver CRX. The coherent receiver CRX is optically coupled to the input of the transceiver section TS'. This coupling is given by the optical line OL and an optical coupler OC . The coherent receiver CRX will be described in more detail with regard to the Figure 6 and 7 later on.

The signal OS1 is furthermore provided to a detector D. The a detector D is optically coupled to the input of the transceiver section TS'. This coupling is given by the optical line OL and an optical coupler OC.

Preferably, the coherent receiver CRX and the detector D are one composite device CD as it will be described later on with regard to the Figures 6 and 7.

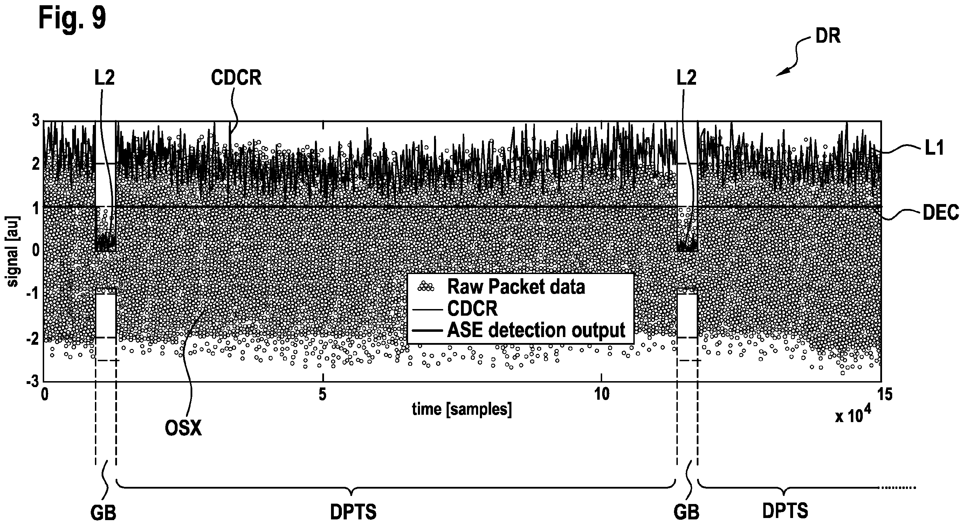

The coherent receiver CRX may detect a data packet within a data packet time slot of the signal OS1. The detector D is used for detecting the presence of a data packet. The detector D sends an electrical driving signal ES1 to a scheduler SCH. The electrical signal ES1 may take on two values, one value indicates the presence of an optical noise signal within the signal OS1 while the other value indicates the presence of an actual data signal within the signal OS1. An actual data signal is preferably an optical signal that is modulated at least in its phase and preferably also in its amplitude. The derivation of the signal ES1 will be described in more detail with regard to the Figures 6 and 9.

The scheduler SCH may then derive from the signal ES1 the detection of a data packet. The scheduler SCH may also detect an empty data packet time slot or a guard band time slot using the signal ES1.

The scheduler SCH decides in dependence on the electrical signal ES1 whether or not a new data packet may be inserted into the signal OS1 by a transmitter TXB. The transmitter TXB is preferably a burst-mode transmitter.

In the case, that the scheduler SCH decides, that a new data packet should be inserted by the burst-mode transmitter TXB, the scheduler SCH signals this to the burst-mode transmitter TXB via and electrical driving signal ES2 indicating such desired insertion. The burst-mode transmitter then generates a new optical data packet as a new optical signal NOS, which is coupled into the optical line OL via an optical coupler OC. The scheduler SCH also provides the electrical driving signal ES2 to an optical gate OG, which is placed within the optical line OL in front of or before the optical coupler OC connecting or optically coupling the optical line OL with the burst-mode transmitter TXB.

An optical delay line ODL1 is placed in front of or before the optical gate OG. The delay caused by the optical delay line ODL1 allows the scheduler SCH sufficient time to process the information provided by the signal ES1 for deciding and sending its signal ES2 as a command to the transmitter TXB and the gate OG. During a data packet time slot, within which the transmitter TXB is supposed to insert a new data packet, the optical gate OG is instructed by the schedulers SCH via the signal ES2 to block an optical signal reaching the optical gate OG. Preferably, the optical gate blocks an optical signal with a very high extinction ratio, which is preferably higher than 40dB.

To summarize aspects described above, the scheduler SCH controls an insertion of the new data packet by the transmitted TXB into a data packet time slot, using the detection result provided by the detector D.

The compensation unit COMP aims to the task of inserting an amount of an optical noise signal into the modified optical signal MOS1' leaving the transceiver section TS', which may be of advantage since optical noise signals present within empty data packet time slots and/or guard band time slots of the signal OS1 may be attenuated in their power within the transceiver section TS'. Thus, there may be a need for stabilizing the optical power of optical noise signals present within the guard band time slots and/or empty data packet time slots of the signal OS1.

An optical noise signal is generated as amplified spontaneous emission noise by an amplifier AMP. The optical noise signal may be filtered by an optical filter OF, wherein the center frequency of the optical filter corresponds to the normal wavelength of the signal OS1.

The amplifier AMP may be an amplifier provided specifically for one single transceiver section TS'. Preferably, the amplifier AMP is provided for multiple transceiver sections not shown explicitly in Figure 4.

Even more preferably, more than one amplifier AMP is provided for redundancy purposes.

The power level of the optical noise generated by the amplifier AMP is modulated by an external optical modulator MOD. The modulator MOD is driven by an electrical signal provided by a photodiode PH. The photodiode PH is coupled via an optical coupler OC to the optical line OL, such that the photodiode PH observes an optical power preset within the optical line at a position, which is placed behind the transmitter TXB. The electrical signal provided by the photodiode PH is amplified with a negative coefficient CF, such that the modulator MOD blocks the optical noise signal coming from the amplifier AMP in the case, that the power at the input of the photodiode PH lies above a pre-defined level of optical power. This pre-defined level of optical power preferably corresponds to an expected nominal power of data packets within the signal OS1. This implies an extinction ratio of the modulator MOD of at least 40dB in order to avoid a degradation of the optical signal-to-noise ratio of the packets transiting within the optical line OL. Preferably, the modulator MOD is a semiconductor optical amplifier.

In the case, that the optical power measured by the photodiode PH is smaller than the second pre-defined power level, which is smaller than the previously mentioned power level, the modulator allows the optical noise signal generated by the amplifier AMP to pass the modulator MOD. The modulator MOD then provides the optical noise signal ONS to the optical line, preferably via an optical coupler OC.

The generated modified optical signal MOS1' is then provided at the output of the transceiver section TS' to the multiplexing device shown in Figure 3a.

A second optical delay line ODL2 is preferably placed between the optical coupler OC providing optical power to the photodiode PH and the optical coupler OC coupling the modulator MOD to the optical line OL. This allows a synchronization of the voltage, which is provided by the photodiode PH via the coefficient CF to the modulator MOD, with the electrical signal ES1, which is preferably also provided by the detector to the modulated MOD.

The attenuation achieved by the modulator is such, that the sum of the power measured on the photodiode and the power delivered by the modulator MOD is equal to a pre-defined power level that should be reached.

Due to the fact, that optical power of an optical data packet may not be strictly constant, there may be the risk, that the photodiode PH interprets such slight power discrepancies as a guard band time slot into which the optical noise signal ONS has to be inserted. In such a case, it may occur, that the photodiode PH drives via the coefficient CF the modulator MOD, such that the optical noise signal ONS is inserted within a data packet time slot within which an actual data packet is present, which in turn would degrade data transmission within this data packet time slot. Therefore, further redundancy may be needed.

Information about the presence of a data packet within a data packet time slot may be provided to the modulator MOD by two different elements. The element as the detector D may provide the signal ES1 to the modulator MOD. The element as the transmitter TXB may provide an electrical signal ES3 indicating the presence of an optical signal imposing a newly inserted data packet. The signal ES1 indicates whether or not a data packet in the form of a modulated data signal is received at the transceiver section TS'. The modulator MOD is driven directly by these signals and not by the voltage provided by the photodiode PH via the coefficient CF to the modulator MOD. In the case, that one of the signals ES1 or ES3 indicates the presence of a data packet, the modulator MOD blocks the optical noise signal ONS, which has the advantage that the optical noise signal ONS is not inserted into a data packet time slot within which a data packet is present.

To summarize some aspects provided above, the scheduler SCH controls an insertion of the optical noise signals ONS, using the detection result provided by the detector D.

Preferably, the scheduler SCH controls the insertion of the optical noise signal ONS into a guard band time slot or into an empty data packet time slot.

Figure 5 shows a further embodiment of a transceiver section TS" as proposed herein.

The optical signal OS1 is received and provided via an optical OC to the receiver CRX and the detector D. The receiver CRX and the detector D are preferably provided as one composite device CD'. The detector D indicates via the electrical signal ES1 to the scheduler SCH the presence of a data packet. The scheduler SCH controls the optical gate OG as previously described above using the electrical signal ES2. Furthermore, the scheduler SCH indicates via the electrical signal ES2 to the transmitter TXB, whether the transmitter TXB may insert a new optical data packet.

An optical delay line ODL is placed in front or before of the optical gate OG for allowing synchronization between the detector D and the transmitter TXB via the scheduler SCH.

An optical noise signal is provided as amplified spontaneous emission noise by an amplifier AMP, as previously described above. The noise signal is then filtered by an optical filter OF as previously describes above, leading to the optical noise signal ONS. The signal ONS is then inserted into the optical line OL by the modulator MOD in dependence on the electrical signal ES3 provided by the transmitter TXB and an electrical driving signal ES11 provided by the detector D by the modulator MOD. The signal ES11 is derived from the signal ES1 using a negative coefficient CF. The optical signals generated by the transmitter TXB and the modulator MOD are then coupled into the optical line OL via an optical coupler OC.

The embodiment of a transceiver section TS" shown in Figure 5 exhibits less insertion loss with regard to the transceiver section TS' shown in Figure 4, due to the fact that the optical signal OS1 passes only through one optical delay line instead of two delay lines and also due to the fact, that the optical signal OS1 passes only two optical couplers OC instead of four optical couplers OC. Due to the fact, that the burst-mode transmitted TXP an d the modulator MOD are coupled to the optical line OL via an additional optical coupler OC, the transceiver section TS" of Figure 5 needs a more powerful burst-mode transmitted TXP in comparison to the TXP needed for the embodiment of Figure 4.

Figure 6 shows the detector D according to a preferred embodiment. The detector D contains an optical mixer OM, which is able to down mix or down convert the optical signal OS1 using a local oscillator optical signal provided by a local oscillator LO. The optical mixer derives an analogue electrical in-phase signal component AEIS and an analogue electrical quadrature signal component AEQS.

The analogue electrical signals AEIS and AEQS are then sampled by respective analogue digital converters ADC, yielding respective time discrete signal components TDIC and TDQC. These time discrete signal components TDIC and TDQC are then superposed, to yield a time discrete signal TDS. Preferably, the signal component TDQC is multiplied by the factor j before superposing the in-phase and the quadrature signal component TDIC and TDQC.

Preferably, the analogue-to-digital converters ADC sample the signal component AEIS and AEQS at a sampling rate, which is at least the rate of two samples per second.

An intensity ix of the signal TDS is calculated, by squaring the magnitude of the signal. A first discrete spectral component of the signal TDS is determined, which is the signal component

$$I_X(f=0)\ .$$

This first discrete spectral component corresponds to a direct current component of the signal TDS. In other words, the first discrete spectral component corresponds to a null frequency

$$f=0\ .$$

Furthermore, a second discrete spectral component of the signal TDS is determined, wherein this component corresponds to a symbol rate R of the optical signal OS1, which is the signal component

$$I_X(f = R).$$

Preferably the second discrete spectral component corresponds to a frequency that is equal to the symbol rate R as

$$f = R.$$

The spectral components may be derived using a discrete spectral transform. The discrete spectral transform is preferably a Discrete Fourier Transform DFT.

A ratio CDCR of the spectral components is derived. This ratio, preferably called fraction, is derived as the second spectral frequency component divided by the first component. In the case, that the ratio CDCR falls below a pre-defined threshold Th, it is decided, that no data packet is detected. In the case that the ratio CDCR exceeds the pre-defined threshold Th, it is decided, that a data packet is present. The value CDCR is then used, to determine, which value the signal ES1, previously described with regard to the Figures 4 and 5, shall take on. As previously mentioned, the signal ES1 indicates whether an optical noise signal is present within the received optical signal or whether and actual data signal is present within the received optical signal. In other words, the signal ES1 indicates whether or not a data packet is present within the received optical signal.

The value used for the threshold *Th* depends on different parameters of a DSP carrying out the different signal processing steps described with regard to Figure 6.

As an example, a method for deriving a value for the threshold *Th* is one, in which the so-called duty cycle of the data packet is used. The duty cycle DCYC is defined as the duration of the data packet time slot divided by the sum of the duration of the data packet time slot plus the time duration of the guard band time slot, which is therefore a number between 0 and 1.

An average value of the quantity of the ratio CDCR is measured over a time sufficient to minimize the impact of noise. Preferably, this time is equivalent to a time duration of 10 or 20 data packets.

The threshold *Th* is set to the value depending on the duty cycle and the measured average ratio provided by the previous measurement. In detail, the threshold *Th* is set to

$$Th = \frac{\overline{CDCR}}{2 \cdot DCYC}.$$

This ensures an optimal value of the threshold in the case that the ratio CDCR is close to zero during a guard band time slot.

The detector D shows elements, such as the optical mixer OM and analogue digital converters ADC, which may be an integral part of the coherent receiver CRX as shown in the Figures 4 or 5. Thus, the detector D may be an integral part of a composite device CD shown in Figure 4 or CD' shown in Figure 5, in which the detector D and the receiver CRX are provided as combined devices.

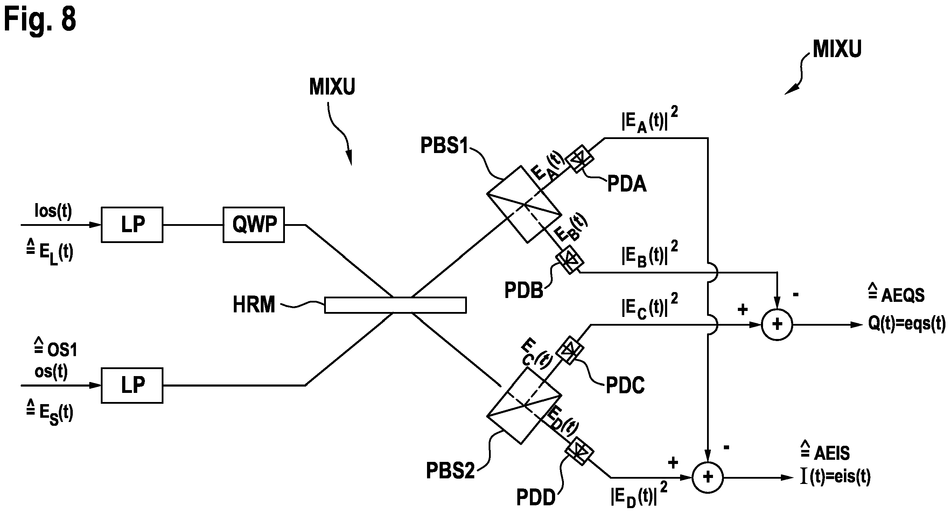

The optical mixer OM is now described as an optical mixing unit MIXU in more detail with regard to Figure 8. Figure 8 shows the optical mixing unit MIXU, which is able to perform downconversion of the received optical signal OS1 for one polarization state, leading to the analogue electrical inphase signal component AEIS and the analogue electrical quadrature signal component AEQS for that polarization state. Taking into consideration the detailed explanations given with regard to the optical mixing unit MIXU, a person in the art is able to foresee a device that is also able to perform downconversion of the received optical signal ROS for another, orthogonal polarization state, leading to an electrical inphase signal component ESIX and an electrical quadrature signal component for that other polarization state

Figure 8 shows the received optical signal OS1, also denoted as os(t), which has an electrical field ES(t), that can be described by an amplitude $A_s(t)$, a frequency $\omega_s$ and a phase $\varphi_s$ as

$$E_s(t) = A_s(t) \cdot e^{j(\omega_s - \varphi_s)}.$$

The local optic signal LOS, also denoted as los(t), has an electrical field EL(t), that can be described by amplitude

$A_l(t)$, a frequency $\omega_l$ and a phase $\varphi_l$ as

$$E_L(t) = A_L(t) \cdot e^{j(\omega_L - \varphi_L)}$$

The optical signal os(t) is provided to a linear polarizer LP. The linear polarizer LP polarizes the optical signal os(t), such that the resulting optical signal has an electrical field that is rotated by an angle of 45° to the principle axis of the two polarization beam splitters PBS1, PBS2 of the mixing unit MIXU. The local optical signal los(t) is provided to a linear polarizer LP, which aligns the optical signal and the electrical field, such that it is aligned in line with the fast axis of the following quarter-wave plate QWP.

The quarter-wave plate QWP causes a circular polarization of the incoming optical signal which yields with respect to the principal axis of the polarization beam splitters PBS1, PBS2 respective components, that are shifted by a phase of $\pi/2$. That optical component leaving the quarter-wave plate QWP, that is aligned with the passed through axis of the polarization beam splitters PBS1, PBS2, is shifted by $\pi/2$, while the other component does not experience a phase shift.

The linearly polarized optical signal os(t) coming from the linearly polarized LP is distributed by half-reflective mirror HRM to the polarization beam splitters PBS1, PBS2. Furthermore, the two signal components of the circularly polarized optical signal leaving the quarter-wave plate QWP are also distributed by this half-reflecting mirror HRM to the polarization beam splitters PBS1, PBS2.

Optical signals arriving at the polarization beam splitter PBS1 are split, such that optical signals lying within a polarization plane aligned with the pass-through axis of the polarization beam splitter PBS1 are transferred to a photodiode PDA. Optical signals coming in to the polarization beam splitter PBS1 in a polarization plane aligned with the reflecting axis of the polarization beam splitter PBS1 are reflected to a photodiode PDB. The electrical field of the optical signal reaching the photodiode PDA can be described as the electrical field EA(t). The electrical field of the optical signals reaching the photodiode PDB can be described as the electrical field EB(t).

The optical signals coming in to the polarization beam splitter PBS2 in alignment with the polarization plane corresponding to the pass-through axis of the polarization beam splitter PBS2 are passed on to a photodiode PDD. Optical signals coming in to the polarization beam splitter PBS2 in a polarization plane aligned with the reflecting axis of the polarization beam splitter PBS2 are reflected to a photodiode PDC.

The electrical field of the optical signal reaching the photodiode PDC can be considered as the electrical field EC(t). The electrical field of the optical signal reaching the photodiode PDD can be considered as the electrical field ED(t).

The electrical fields reaching the photodiodes PDA, PDB, PDC, PDD can be described as it will be now shown in detail below.

The electrical field ES(t) does not experience any phase shift by the half-reflective mirror HRM known by the polarization beam splitter PBS1. Therefore, the electrical field ES(t) is not subject to a phase shift. The electrical field EL(t) is subject to a phase shift by $\pi/2$ due to the reflection by the half-reflective mirror HRM, as well as a phase shift by $\pi/2$ caused by the quarter-wave plate QWP. Therefore the electrical field EL(t) experiences an overall phase shift by $\pi$ before reaching the photodiode PDA. Therefore, the electrical field EA(t) can be described as

$$E_A(t) = E_S(t) + E_L(t) \cdot e^{j\pi} \; .$$

The electrical field ES(t) experiences a phase shift by $\pi/2$ before reaching the photodiode PDB, due to the reflection within the polarization beam splitter PBS1. The electrical field EL(t) experiences a first phase shift by $\pi/2$ at the half-reflecting mirror and a second phase shift by $\pi/2$ during the reflection within the polarization beam splitter PBS1, before reaching the photodiode PDB. Therefore, the electrical field EB(t) can be written as

$$E_B(t) = E_S(t)e^{j\pi/2} + E_L(t) \cdot e^{j\pi} \; .$$

The electrical field ES(t) experiences a phase shift by $\pi/2$ due to the reflection at the half-reflective mirror HRM as well as a phase shift by $\pi/2$ during the reflection within the polarization beam splitter PBS2, before reaching photodiode PDC. The electrical field EL(t) experiences a phase shift by $\pi/2$ within the polarization beam splitter PBS2 during the reflection before reaching the photodiode PDC. Therefore, the electrical field EC(t) can be written as

$$E_C(t) = E_S(t)e^{j\pi} + E_L(t) \cdot e^{j\pi/2} \quad.$$

The electrical field ES(t) experiences a phase shift by $\pi/2$ at the half-reflective mirror HRM, before reaching the photodiode PDD. Furthermore, the electrical field EL(t) experiences a phase shift by $\pi/2$ within the quarter-wave plate QWP, before reaching the photodiode PDD. Therefore, the electrical field ED(t) can be written as

$$E_D(t) = E_S(t)e^{j\pi/2} + E_L(t) \cdot e^{j\pi/2} \quad.$$

The photodiodes PDA, PDB, PDC, PDD generate electrical signals at their outputs, which correspond to the intensities of the electrical fields reaching the photodiodes PDA, PDB, PDC, PDD, therefore each photodiode, PDA, PDB, PDC, PDD, generates electrical signals $|E_A(t)|^2$, $|E_B(t)|^2$, $|E_C(t)|^2$, $|E_D(t)|^2$ which are equivalent to the squared magnitudes of the electrical signals reaching the photodiodes PDA, PDB, PDC, PDD.

The electrical signal $|E_B(t)|^2$ provided by the photodiode PDB is subtracted from the electrical signal $|E_C(t)|^2$ provided by the photodiode PDC. This yields a signal Q(t), which can be shown to be and be described as

$$Q(t) = \left|E_C(t)\right|^2 - \left|E_B(t)\right|^2 = \frac{1}{2}A_S(t) \cdot A_L \cdot \sin(\varphi_1(t)) \,.$$

Furthermore, the electrical signal $|E_A(t)|^2$ provided by the photodiode PDA is subtracted from the electrical signal $|E_D(t)|^2$ provided by the photodiode PDD, which yields an electrical signal I(t), which can be derived as

$$I(t) = \left|E_D(t)\right|^2 - \left|E_A(t)\right|^2 = \frac{1}{2}A_S(t) \cdot A_L \cdot \cos(\varphi_1(t)) \,.$$

Within the electrical signals I(t), Q(t), the phase $\varphi_1(t)$ can be shown to be

$$\varphi_1(t) = (\omega_S - \omega_L) \cdot t + \varphi_S(t) - \varphi_L(t).$$

In the case, that the frequency $\omega_L$ of the local optical signal los(t) is essentially equal to the frequency $\omega_S$ of the optical signal os(t), the phase $\varphi_1(t)$ of the signals I(t), Q(t) is reduced to the difference between the phase $\varphi_S(t)$ of the optical signal os(t) and the phase $\varphi_L(t)$ of the local optical signal los(t) as

$$\varphi_1(t) \approx \varphi_S(t) - \varphi_L(t).$$

Therefore, the signal I(t) can be considered as an analogue electrical in-phase signal component AEIS, also denoted as *I(t) = eis(t)*, of the optical based-band signal obtained by mixing the optical signal os(t) with the local optical signal los(t). Furthermore, for the same reason explained above, the signal Q(t) can be considered as an analogue electrical quadrature signal component AEQS, also denotd as *Q(t) = eqs(t)*, of an optical based-band obtained by mixing the optical signal os(t) with the local optical signal los(t).

To summarize the above, the mixing unit MIXU mixes the optical signal OS1 and the optical local oscillator signal los(t) in the optical domain, for yielding a set of optical mix signals EA(t), EB(t), EC(t), ED(t). From the optical mix signals EA(t), EB(t), EC(t), ED(t), an analogue electrical in-phase signal component AEIS and an analogue electrical quadrature signal component AEQS are derived.

Figure 7 shows a combined device CD" which contains receiving elements of a coherent receiver as well as detection elements of a detector. The combined device CD" contains an optical mixer OM', which derives signal components in the case, that the signal OS1' provided to the mixer OM' is a polarization division multiplexed signal. The mixer OM' derives analogue electrical signal components AEIS1 and AEQS1 from a first polarization plane of the signal OS1'. From these signal components AEIS1 and AEQS1, an electrical time discrete signal TODS1 is derived as previously described above. The signal TODS1 may then be used for a detection of data packets as previously described above.

The mixer OM' derives furthermore analogue electrical signal components AEIS2 and AEQS2 as previously described above. From such in-phase quadrature signal components AEIS2 and AEQS2, a respective time discrete signal TDS2 may be derived, as it has been outlined in detail above.

The time discrete signals TDS1 and TDS2 may then be used within receiving steps RS of the receiving section for deriving received data RD1 and RD2.

Figure 9 shows an example of detection results DR.

Shown is an optical signal OSX over time. The signal OSX contains within the guard band time slots JB a noise signal. Figure 9 shows furthermore the determined ratio CDCR of the spectral components over time. It becomes clear, that the determined ratio CDCR changes from one level L1 during data packet time slots DPTS to a second level L2 during guard band time slots JB. The derived detection decision DEC as a value between 0 and 1 is also plotted. The results of Figure 9 clearly indicate, that the method proposed herein is a powerful method for allowing a detection of data packets in the case, that optical noise signals are transmitted within guard band time slots. In the example shown in Figure 9, the optical signal-to-noise ratio was 10dB within 0.1 nm, while the data packets are separated by guard band time slots containing amplified spontaneous emission noise as optical noise signals. The optical signal in this example has a symbol rate of r=32 Gbaud, which is the standard symbol rate for 100Gbit/s PDM-QPSK signals. The delay caused for detecting a change between a data packet and a guard band time slot has been measured in this example to be 4ns.

The different devices as the scheduler SCH, the coherent receiver CRX and the detector D shown in the Figures 4 and 5 may be implemented as one or more separate processing units or as a combined processing unit. The different devices SCH, CRX and D may be connected with each other as well as with the further elements of the transceiver section TS' and TS" of the Figures 4 or 5 via a low speed analogue digital controller for exchanging the electrical signals described with regard to the Figures 4 and 5.

The functions of the various elements described with regard to the Figures, including any functional blocks labeled as 'scheduler' or 'processing unit', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'scheduler' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

**Claims**

1. Method of optical data transmission,
   wherein data is transmitted using multiple phase-modulated optical wavelength division multiplexed (WDM) signals (SOS) carrying respective synchronous data packet sequences,
   wherein said data packet sequences comprise data packets (DP) within respective data packet time slots (DPS),
   and wherein said data packet time slots (DPS) are separated by guard band time slots (GBS), comprising, at a receiving side,

   - receiving said optical WDM signals (SOS),

   **characterized by**

   - detecting a data packet within at least one of said optical WDM signals (OS1), by

     ◦ deriving a time-discrete electrical signal (TDS), by down-converting said one optical WDM signal (OS1) using an optical local oscillator signal,
     ◦ determining a first discrete spectral component of said time-discrete electrical signal (TDS), wherein said first discrete spectral component corresponds to a direct current component of said time-discrete electrical signal (TDS),
     ◦ determining a second discrete spectral component of said time-discrete electrical signal (TDS), wherein said second discrete spectral component corresponds to a symbol rate of said one optical WDM signal (OS1),
  ◦ detecting said data packet, in case a fraction (CDCR) between said spectral components exceeds a predefined threshold (Th).

2. Method according to claim 1,
comprising furthermore

- detecting an absence of a data packet, in case said a fraction (CDCR) falls below said predefined threshold (Th).

3. Method according to claim 1 or 2,
wherein said first discrete spectral component is a discrete spectral component corresponding to a null frequency, and wherein said second discrete spectral component is a discrete spectral component corresponding to a frequency equal to said symbol rate.

4. Method according to claim 1,
wherein the step of deriving said time-discrete electrical signal (TDS), by down-converting said one optical WDM signal (OS1) using an optical local oscillator signal, comprises

- mixing said one optical WDM signal (OS1) and said optical local oscillator signal in the optical domain, yielding a set of optical mix signals (EA(t), EB(t), EC(t), ED(t)),
- deriving from said optical mix signals (EA(t), EB(t), EC(t), ED(t)) an analogue electrical in-phase signal component (AEIS) and an analogue electrical quadrature signal component (AEQS),
- sampling said analogue electrical signal components (AEIS, AEQS), yielding a time-discrete electrical in-phase signal component (TDIC) and a time-discrete electrical quadrature signal component (TDQC),
- deriving said time-discrete electrical signal (TDS), using said time-discrete electrical signal components (TDIC, TDQC).

5. Method according to claim 1,

- controlling an insertion of a new data packet into one of said data packet time slots, using the obtained detection result.

6. Method according to claim 1,
comprising furthermore

- controlling an insertion of an optical noise signal, using the obtained detection result.

7. Method according to claim 6,

- controlling said insertion of said optical noise signal into a guard band time slots or into an empty data packet slot, using the obtained detection result.

8. Method according to claim 1,
wherein said optical WDM signals (SOS) are also polarization division multiplexed (PDM) signals,
and wherein a data packet is detected within at least one of said optical WDM signals (OS1), by deriving a time-discrete electrical signal (TDS1), by down-converting a PDM signal component of said one optical WDM signal using an optical local oscillator signal.

9. Method according to claim 1,
wherein said multiple phase-modulated optical WDM signals (SOS) are signals, which are also modulated in their amplitude.

10. Optical network element,
comprising

- a first optical interface (OI1), operable to receive multiple phase-modulated optical wavelength division multiplexed (WDM) signals (SOS) carrying respective synchronous data packet sequences,
wherein said data packet sequences comprise data packets (DP) within respective data packet time slots (DPS),

and wherein said data packet time slots (DPS) are separated by guard band time slots (GBS),
- an optical mixer (OM), operable to derive a time-discrete electrical signal (TDS), by down-converting at least one of said optical WDM signals (OS1) using an optical local oscillator signal,
- **characterized by** at least one processing unit, operable

◦ to determine a first discrete spectral component of said time-discrete electrical signal (TDS), wherein said first discrete spectral component corresponds to a direct current component of said time-discrete electrical signal (TDS),
◦ to determine a second discrete spectral component of said time-discrete electrical signal (TDS), wherein said second discrete spectral component corresponds to a symbol rate of said one optical WDM signal (OS1),
◦ to detect a data packet within at least one of said optical WDM signals (OS1), in case a fraction (CDCR) between said spectral components exceeds a predefined threshold (Th).

11. Optical network element according to claim 10,
wherein said processing unit is furthermore operable to detect an absence of a data packet, in case said a fraction (CDCR) falls below said predefined threshold (Th).

12. Optical network element according to claim 10 or 11,
wherein said first discrete spectral component is a discrete spectral component corresponding to a null frequency, and wherein said second discrete spectral component is a discrete spectral component corresponding to a frequency equal to said symbol rate.

13. Optical network element according to claim 10,
wherein said optical network element (ONE) comprises furthermore an optical transmitter (TXB), which is operable to generate a new data packet,
wherein said processing unit is furthermore operable to control an insertion of a new data packet into one of said data packet time slots by said optical transmitter (TXB), using the obtained detection result.

14. Optical network element according to claim 10,
wherein said optical network element comprises furthermore an optical noise generation unit, wherein said processing unit is furthermore operable to control an insertion of an optical noise signal by said optical noise generation unit, using the obtained detection result.

15. Optical network element according to claim 10,
wherein said processing unit is furthermore operable to control said insertion of said optical noise signal into a guard band time slots (GBS) or into an empty data packet slot by said optical noise generation unit, using the obtained detection result.

**Patentansprüche**

1. Verfahren zur optischen Datenübertragung,
wobei Daten unter Verwendung phasenmodulierter optischer Wellenlängenmultiplex-Signale (Phase-Modulated optical Wavelength Division Multiplexed - WDM, Signals - SOS) übermittelt werden, die entsprechende, synchrone Datenpaketsequenzen transportieren,
wobei besagte Datenpaketsequenzen Datenpakete (DP) in zugehörigen Datenpaket-Zeitschlitzen (DPS) umfassen, und wobei besagte Datenpaket-Zeitschlitze (Data Packet Time Slots, DPS) durch Schutzband-Zeitschlitze (Guard Band Time Slots, GBS) voneinander getrennt sind,
auf einer empfangenden Seite Folgendes umfassend:

- das Empfangen besagten optischen WDM-Signals (SOS),

**gekennzeichnet durch**

- das Erkennen eines Datenpakets in mindestens einem der besagten, optischen WDM-Signale (OS1) **durch**

◦ das Ableiten eines zeitdiskreten elektrischen Signals (Time-Discrete Signal, TDS) **durch** das Herunterkonvertieren besagten optischen WDM-Signals (OS1) unter Verwendung eines optischen Lokaloszillatorsignals,

◦ das Bestimmen einer ersten diskreten Spektralkomponente besagten zeitdiskreten elektrischen Signals (TDS), wobei besagte erste diskrete Spektralkomponente einer Direktstromkomponente des besagten, zeitdiskreten elektrischen Signals (TDS) entspricht,

◦ das Bestimmen einer zweiten diskreten Spektralkomponente besagten zeitdiskreten elektrischen Signals (TDS), wobei besagte zweite diskrete Spektralkomponente einer Symbolrate des besagten, einen optischen WDM-Signals (OS1) entspricht,

◦ das Erkennen besagten Datenpakets, falls eine Fraktion (CDCR) zwischen besagten Spektralkomponenten einen vordefinierten Grenzwert (Th) überschreitet.

2. Verfahren nach Anspruch 1,
weiterhin umfassend:

- das Erkennen eines Nichtvorhandenseins eines Datenpakets, falls eine Fraktion (CDCR) unter den besagten, vordefinierten Grenzwert (Th) fällt.

3. Verfahren nach Anspruch 1 oder 2,
wobei besagte erste diskrete Spektralkomponente eine einer Nullfrequenz entsprechende, diskrete Spektralkomponente ist,
und wobei besagte zweite diskrete Spektralkomponente eine diskrete Spektralkomponente ist, die einer Frequenz entspricht, die gleich der besagten Symbolrate ist.

4. Verfahren nach Anspruch 1,
wobei der Schritt des Ableitens des besagten, zeitdiskreten elektrischen Signals (TDS) durch das Herunterkonvertieren besagten optischen WDM-Signals (OS1) unter Verwendung eines optischen Lokaloszillatorsignals umfasst:

- das Mischen des besagten, einen optischen WDM-Signals (OS1) und des besagten, optischen lokalen Oszillatorsignals in der optischen Domain unter Nutzung eines Satzes optischer Mischsignale (EA(t), EB(t), EC(t), ED(t)),
- das Ableiten einer analogen elektrischen Inphase-Signalkomponente (AEIS) und einer analogen elektrischen Quadratur-Signalkomponente (AEQS) von besagten optischen Mischsignalen (EA(t), EB(t), EC(t), ED(t)),
- das Abtasten der besagten, analogen elektrischen Signalkomponenten (AEIS, AEQS) unter Nutzung einer zeitdiskreten elektrischen Inphase-Signalskomponente (TDIC) und einer zeitdiskreten elektrischen Quadratur Signalskomponente (TDQC),
- das Ableiten besagten zeitdiskreten elektrischen Signals (TDS) unter Verwendung der besagten, zeitdiskreten elektrischen Signalkomponenten (TDIC, TDQC).

5. Verfahren nach Anspruch 1,

- unter Verwendung des erzielten Detektionsergebnisses das Steuern des Einfügens eines neuen Datenpakets in einen der besagten Datenpaket-Zeitschlitze umfassend.

6. Verfahren nach Anspruch 1,
weiterhin umfassend:

- das Steuern eines Einfügens eines optischen Rauschsignals unter Verwendung des erzielten Detektionsergebnisses.

7. Verfahren nach Anspruch 6,
unter Verwendung des erzielten Detektionsergebnisses das Steuern besagten Einfügens besagten optischen Rauschsignals in einen Schutzband-Zeitschlitz oder in einen leeren Datenpaket-Zeitschlitz umfassend.

8. Verfahren nach Anspruch 1,
wobei die besagten, optischen WDM-Signale (SOS) ebenfalls Polarisationsmultiplex-Signale (Polarization Division Multiplex, PDM) sind,
und wobei durch Ableiten eines zeitdiskreten elektrischen Signals (TDS1) ein Datenpaket in mindestens einem der besagten, optischen WDM-Signal (OS1) detektiert wird, was durch das Herunterkonvertieren einer PDM-Signalkomponente besagten optischen WDM-Signals unter Verwendung eines optischen Lokaloszillatorsignals erfolgt.

**9.** Verfahren nach Anspruch 1,
wobei die besagten, multiplen, phasenmodulierten optischen WDM-Signale (SOS) Signale sind, die auch in ihrer Amplitude moduliert werden.

**10.** Optisches Netzwerkelement,
umfassend:

- eine erste optische Schnittstelle (Optical Interface, OI1), ausgelegt für den Empfang multipler, phasenmodulierter optischer Wellenlängenmultiplex-Signale (WDM; SOS), die entsprechende, synchrone Datenpaketsequenzen transportieren,
wobei besagte Datenpaketsequenzen Datenpakete (DP) in zugehörigen Datenpaket-Zeitschlitzen (DPS) umfassen,
und wobei besagte Datenpaket-Zeitschlitze (DPS) durch Schutzband-Zeitschlitze (GBS) voneinander getrennt sind,
- einen optischen Mischer (OM), ausgelegt für das Ableiten zeitdiskreter elektrischer Signale (TDS) durch das Herunterkonvertieren von mindestens einem der besagten, optischen WDM-Signale (OS1) unter Verwendung eines optischen Lokaloszillatorsignals,
- **gekennzeichnet durch** mindestens eine Verarbeitungseinheit, die ausgelegt ist für:

    ◦ das Bestimmen einer ersten diskreten Spektralkomponente besagten zeitdiskreten elektrischen Signals (TDS), wobei besagte erste diskrete Spektralkomponente einer Direktstromkomponente des besagten, zeitdiskreten elektrischen Signals (TDS) entspricht,
    ◦ das Bestimmen einer zweiten diskreten Spektralkomponente besagten zeitdiskreten elektrischen Signals (TDS), wobei besagte zweite diskrete Spektralkomponente einer Symbolrate des besagten, einen optischen WDM-Signals (OS1) entspricht,
    ◦ das Erkennen eines Datenpakets in mindestens einem der besagten, optischen WDM-Signale (OS1), falls eine Fraktion (CDCR) zwischen besagten Spektralkomponenten einen vordefinierten Grenzwert (Th) überschreitet.

**11.** Optisches Netzwerkelement nach Anspruch 10,
wobei besagte Verarbeitungseinheit weiterhin ausgelegt ist für das Erkennen eines Nichtvorhandenseins eines Datenpakets, falls eine Fraktion (CDCR) unter den besagten, vordefinierten Grenzwert (Th) fällt.

**12.** Optisches Netzwerkelement nach Anspruch 10 oder 11,
wobei besagte erste diskrete Spektralkomponente eine einer Nullfrequenz entsprechende, diskrete Spektralkomponente ist,
und wobei besagte zweite diskrete Spektralkomponente eine diskrete Spektralkomponente ist, die einer Frequenz entspricht, die gleich der besagten Symbolrate ist.

**13.** Optisches Netzwerkelement nach Anspruch 10,
wobei besagtes optisches Netzwerkelement (ONE) weiterhin einen optischen Sender (TXB) umfasst, der ausgelegt ist für das Generieren eines neuen Datenpakets,
wobei besagte Verarbeitungseinheit weiterhin ausgelegt ist für das Steuern eines Einfügens eines neuen Datenpakets in einen der besagten Datenpaket-Zeitschlitze durch besagten optischen Sender (TXB) unter Verwendung des erzielten Detektionsergebnisses.

**14.** Optisches Netzwerkelement nach Anspruch 10,
wobei besagtes optisches Netzwerkelement weiterhin eine Erzeugungseinheit für optisches Rauschen umfasst,
wobei besagt Verarbeitungseinheit weiterhin ausgelegt ist für das Steuern des Einfügens eines optischen Rauschsignals durch besagte Erzeugungseinheit für optisches Rauschen unter Verwendung des erzielten Detektionsergebnisses.

**15.** Optisches Netzwerkelement nach Anspruch 10,
wobei besagte Verarbeitungseinheit weiterhin ausgelegt ist für das Steuern besagten Einsetzens besagten optischen Rauschsignals in einen Schutzband-Zeitschlitz (GBS) oder in einen leeren Datenpaket-Zeitschlitz durch besagte Erzeugungseinheit für optisches Rauschen unter Verwendung des erzielten Detektionsergebnisses.

**Revendications**

1. Procédé de transmission optique de données,
dans lequel les données sont transmises par des signaux optiques (SOS) multiples à multiplexage par répartition en longueur d'onde (WDM) à modulation de phase transportant des séquences de paquets de données synchrones correspondantes,
dans lequel lesdites séquences de paquets de données contiennent des paquets de données (DP) dans des intervalles de temps de paquets de données (DPS) correspondants,
et dans lequel lesdits intervalles de temps de paquets de données (DPS) sont séparés par des intervalles de temps de bande de garde (GBS),
comprenant, du côté réception,

- la réception desdits signaux optiques WDM (SOS),

**caractérisé par**

- la détection d'un paquet de données dans au moins l'un desdits signaux optiques WDM (OS1), en

  ◦ dérivant un signal électrique temporel discret (TDS), par transposition par abaissement de fréquence dudit signal optique WDM (OS1) à l'aide d'un signal optique d'oscillateur local,
  ◦ déterminant une première composante spectrale discrète dudit signal électrique temporel discret (TDS), ladite première composante spectrale discrète correspondant à une composante de courant continu dudit signal électrique temporel discret (TDS),
  ◦ déterminant une deuxième composante spectrale discrète dudit signal électrique temporel discret (TDS), ladite deuxième composante spectrale discrète correspondant à un débit de symboles dudit signal optique WDM (OS1),
  ◦ détectant ledit paquet de données, dans le cas où le rapport (CDCR) entre lesdites composantes spectrales dépasse un seuil prédéfini (Th).

2. Procédé selon la revendication 1,
comprenant en outre

- la détection d'une absence de paquet de données, dans le cas où ledit rapport (CDCR) tombe en dessous dudit seuil prédéfini (Th).

3. Procédé selon la revendication 1 ou 2,
dans lequel ladite première composante spectrale discrète est une composante spectrale discrète correspondant à une fréquence nulle,
et dans lequel ladite deuxième composante spectrale discrète est une composante spectrale discrète correspondant à une fréquence égale audit débit de symboles.

4. Procédé selon la revendication 1,
dans lequel l'étape de dérivation dudit signal électrique temporel discret (TDS), par transposition par abaissement de la fréquence dudit signal optique WDM (OS1) à l'aide d'un signal optique d'oscillateur local, comprend les étapes suivantes :

- mélanger ledit signal optique WDM (OS1) et ledit signal optique d'oscillateur local dans le domaine optique, pour produire un ensemble de signaux de mélange optiques (EA(t), EB(t), EC(t), ED(t)),
- dériver desdits signaux de mélange optiques (EA(t), EB(t), EC(t), ED(t)) une composante de signal électrique analogique en phase (AEIS) et une composante de signal électrique analogique en quadrature de phase (AEQS),
- échantillonner lesdites composantes de signal électrique analogique (AEIS, AEQS), pour produire une composante de signal électrique temporel discret en phase (TDIC) et une composante de signal électrique temporel discret en quadrature de phase (TDQC),
- dériver ledit signal électrique temporel discret (TDS), en utilisant lesdites composantes de signal électrique temporel discret (TDIC, TDQC).

5. Procédé selon la revendication 1,

- permettant le contrôle de l'insertion d'un nouveau paquet de données dans l'un desdits intervalles de temps de paquets de données, en utilisant le résultat de détection obtenu.

**6.** Procédé selon la revendication 1, comprenant en outre

- le contrôle de l'insertion d'un signal de bruit optique, en utilisant le résultat de détection obtenu.

**7.** Procédé selon la revendication 6,

- permettant le contrôle de ladite insertion dudit signal de bruit optique dans un intervalle de temps de bande de garde ou dans un intervalle de paquet de données vide, en utilisant le résultat de détection obtenu.

**8.** Procédé selon la revendication 1, dans lequel lesdits signaux optiques WDM (SOS) sont aussi des signaux à multiplexage par répartition de polarisation (PDM), et dans lequel un paquet de données est détecté dans au moins l'un desdits signaux optiques WDM (OS1), en dérivant un signal électrique temporel discret (TDS1), par transposition par abaissement de fréquence d'une composante de signal PDM dudit signal optique WDM à l'aide d'un signal optique d'oscillateur local.

**9.** Procédé selon la revendication 1, dans lequel lesdits signaux optiques WDM multiples à modulation de phase (SOS) sont des signaux qui sont aussi modulés en amplitude.

**10.** Élément de réseau optique, comprenant

- une première interface optique (OI1), permettant de recevoir des signaux optiques (SOS) multiples à multiplexage par répartition en longueur d'onde (WDM) à modulation de phase transportant des séquences de paquets de données synchrones correspondantes, dans laquelle lesdites séquences de paquets de données contiennent des paquets de données (DP) dans des intervalles de temps de paquets de données (DPS) correspondants, et dans laquelle lesdits intervalles de temps de paquets de données (DPS) sont séparés par des intervalles de temps de bande de garde (GBS),
- un mélangeur optique (OM), permettant de dériver un signal électrique temporel discret (TDS), par transposition par abaissement de fréquence d'au moins l'un desdits signaux optiques WDM (OS1) à l'aide d'un signal optique d'oscillateur local,
- **caractérisé par** au moins une unité de traitement, permettant

o de déterminer une première composante spectrale discrète dudit signal électrique temporel discret (TDS), ladite première composante spectrale discrète correspondant à une composante de courant continu dudit signal électrique temporel discret (TDS),
∘ de déterminer une deuxième composante spectrale discrète dudit signal électrique temporel discret (TDS), ladite deuxième composante spectrale discrète correspondant à un débit de symboles dudit signal optique WDM (OS1),
∘ de détecter un paquet de données dans au moins l'un desdits signaux optiques WDM (OS1), dans le cas où le rapport (CDCR) entre lesdites composantes spectrales dépasse un seuil prédéfini (Th).

**11.** Élément de réseau optique selon la revendication 10, dans lequel ladite unité de traitement permet en outre de détecter une absence de paquet de données, dans le cas où ledit rapport (CDCR) tombe en dessous dudit seuil prédéfini (Th).

**12.** Élément de réseau optique selon la revendication 10 ou 11, dans lequel ladite première composante spectrale discrète est une composante spectrale discrète correspondant à une fréquence nulle, et dans lequel ladite deuxième composante spectrale discrète est une composante spectrale discrète correspondant à une fréquence égale audit débit de symboles.

**13.** Élément de réseau optique selon la revendication 10,
dans lequel ledit élément de réseau optique (ONE) comprend en outre un émetteur optique (TXB), qui permet de générer un nouveau paquet de données,
dans lequel ladite unité de traitement permet en outre de contrôler l'insertion d'un nouveau paquet de données dans l'un desdits intervalles de temps de paquets de données par ledit émetteur optique (TXB), en utilisant le résultat de détection obtenu.

**14.** Élément de réseau optique selon la revendication 10,
dans lequel ledit élément de réseau optique comprend en outre une unité de génération de bruit optique,
dans lequel ladite unité de traitement permet en outre de contrôler l'insertion d'un signal de bruit optique par ladite unité de génération de bruit optique, en utilisant le résultat de détection obtenu.

**15.** Élément de réseau optique selon la revendication 10,
dans lequel ladite unité de traitement permet en outre de contrôler ladite insertion dudit signal de bruit optique dans un intervalle de bande de garde (GBS) ou dans un intervalle de paquet de données vide par ladite unité de génération de bruit optique, en utilisant le résultat de détection obtenu.

Fig. 1

**Fig. 2**

one optical packet: up to few µs

Inter packet gap or guard-band (10 to 20 ns) to switch if necessary

DP

DP

header

payload

power

time

OS

DPS

GBS

# Fig. 3a

# Fig. 3b

EP 2 784 951 B1

**Fig. 4**

EP 2 784 951 B1

Fig. 5

# Fig. 6

ASE detection

$|\cdot|^2$ → DFT → $I_x(f=R)/I_x(f=0)$ → ⌐_⌐

ix    IX    CDCR    OUT

= 0 for CDCR < Th

= 1 for CDCR > Th

AEQS    TDQC

ADC

OS1

LO

Down-converter

ADC

AEIS    TDIC

TDS

j

OM

D

EP 2 784 951 B1

# Fig. 7

Fig. 8

EP 2 784 951 B1

**Fig. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1940194 A2
- US 20090297162 A1
- EP 2482481 A1
- US 20110255866 A1